# EUROPEAN PATENT SPECIFICATION

(11) **EP 3 877 933 B1**
(45) Date of publication and mention of the grant of the patent: **01.10.2025**
(21) Application number: 19881920.3
(22) Date of filing: 04.11.2019
(51) Int. Cl.: G06Q 10/04

(54) **SUPPLY CHAIN FORECASTING SYSTEM**
VORHERSAGESYSTEM FÜR LIEFERKETTEN
SYSTÈME DE PRÉVISION DE CHAÎNE D'APPROVISIONNEMENT

(30) Priority: 06.11.2018 US 201862756489 P
(43) Date of publication of application: 15.09.2021
(73) Proprietor: ServiceNow, Inc., Santa Clara, CA 95054 (US)
(72) Inventor: CÔTÉ, Marie-claude, Montreal, Québec H2S 3G9 (CA); DUPLESSIS, Francis, Montreal, Québec H2S 3G9 (CA); TODOSIC, Andrej, Montreal, Québec H2S 3G9 (CA); ALVAREZ, Ignacio, Montreal, Québec H2S 3G9 (CA); FERNANDES, Stenio, Montreal, Québec H2S 3G9 (CA)
(74) Representative: Fuchs Patentanwälte Partnerschaft mbB
(86) International application number: PCT/CA2019/051562
(87) International publication number: WO 2020/093144

(56) References cited:
- US-A- 5 323 403
- US-A1- 2014 058 775
- US-A1- 2017 039 500
- US-A1- 2017 262 764
- MCGRATH, JOSEPH F.: "Parallel Processing for Computational Continuum Dynamics : A Final Report", 10 May 1985 (1985-05-10), XP055707640, Retrieved from the Internet <URL:https://apps.dtic.mil/dtic/tr/fulltext/u2/a158948.pdf> [retrieved on 20191219]
- STEFANOVIC, N. ET AL.: "Supply Chain Business Intelligence: Technologies, Issues and Trends", LECTURE NOTES IN COMPUTER SCIENCE, vol. 5640, no. 558, 2009, pages 217 - 245, XP047383592, Retrieved from the Internet <URL:http://dl.ifip.ore/db/series/lncs/lncs5640/StefanovicS09.pdf> [retrieved on 20191219], DOI: 10.1007/978-3-642-03226-4_12

## Description

### TECHNICAL FIELD

The present invention relates to supply chain management. More specifically, the present invention relates to systems and methods for managing the components of a supply chain using current and historical data to predict potential problems.

### BACKGROUND

The balancing act between having enough product on hand to sell and not having too much inventory is at the core of supply chains. On one hand, companies want to have sufficient goods on hand to sell to their customers as demand rises and falls. However, at the same time, companies do not want to have too much product in inventory as this represents non-performing assets that not only affects the bottom line but may also hold hostage financial assets. To this end, the concepts of just-in-time inventory management and just-in-time manufacturing were conceived. By ensuring that there is a continuous and effective flow of products from the products sources, such as factories and product assembly points, to the storage depots and from the depots to the retail points, inventory requirements can be reduced, producing a more efficient (and hence profitable) system.

However, while the above is laudable and has produced impressive results, the overall supply chain becomes more susceptible to disruption. As an example, previously, a manufacturing issue at a factory that stops production for a number of days can be absorbed as inventory levels in depots or stores could be sufficiently high enough such that no deliveries for up to a few weeks can be dealt with. However, with the above methods of just-in-time inventory and manufacturing techniques, inventory levels have been reduced such that no deliveries for as little as 2 days can be disastrous. Because of this vulnerability to disruptions, current supply chain management systems seek to not just manage inventory but also the routing, scheduling, and even manufacturing components of the supply chain. However, current systems are unable to predict future problems with not just the routing but with the scheduling. In addition, current systems are unable to offer integrated views of all business functions in an enterprise as such systems are usually managed, not by the enterprise, but by third party service providers. As well, business functions tend to be managed using disparate systems that are unable or incapable of communicating with one another.

Based on the above, there is therefore a need for systems and methods that mitigate if not overcome the issues with the prior art. Preferably, such systems and methods are able to predict potential supply chain issues well before the issues arrive and well before such issues become problems that affect inventory levels. Also preferably, such systems and methods would, effectively, be able to establish end to end relationships between events across an enterprise and across different business specialties within that enterprise.

Documents US 2017039500 A1 and US 2014058775 A1 disclose a Global Supply Chain Intelligence System (GSIS) adapted to predict, discover and verify commodity trade flows.

### SUMMARY

The present invention provides systems and methods for managing a supply chain. A multi-stage system receives data regarding different components and parts of a supply chain. These data points are formatted, streamed, and classified into a multitude of analysis modules that predictively assess potential problems in the supply chain. Identified potential problems are then further classified, ranked, and routed to relevant users who need to be informed of the potential problems. These users can then implement mitigating actions that mitigate if not prevent the consequences of these potential problems in the supply chain.

In a first aspect, the present invention provides a system for managing a supply chain, the system comprising:
- a data layer stage for receiving data regarding components of said supply chain and for formatting said data for use by subsequent stages of said system;
- a data analysis stage for receiving and analyzing said data regarding said components of said supply chain;
- an issue analysis stage receiving outputs of said data analysis stage, said issue analysis stage also being for classifying said outputs of said data analysis stage and routing said outputs to at least one end user: and
- a results presentation stage for presenting results from said issue analysis stage to said at least one end user.

**In** a second aspect, the present invention provides a system for managing flows and assets of a supply chain, the system comprising:
- a data layer stage for receiving data regarding components of said supply chain and for formatting said data for use by subsequent stages of said system;
- a data analysis stage for receiving and analyzing said data regarding said components of said supply chain, said data analysis stage comprising a plurality of analysis modules operating in parallel to one another, each of said analysis modules being for either
   - detecting potential problems with said components of said supply chain; or
   - predicting problems with said components prior to said problems occurring;
- an issue analysis stage receiving outputs of said data analysis stage, said issue analysis stage also being for:
   - classifying predicted problems and for classifying potential problems to determine which components of said supply chain said problems relate to;
   - ranking a severity of said problems;
   - routing at least one of said outputs of said data analysis stage to an end user, wherein said routing is based on at least one of: a nature of said problem and a severity of said problem;
- a results presentation stage for presenting results from said issue analysis stage to said at least one end user;
wherein said at least one end user, when presented with at least one problem from an analysis module, adjusts at least one parameter in said supply chain and an adjusted at least one parameter is fed back to said data layer stage such that said at least one parameter is used to determine effects on at least one component of said supply chain.

### BRIEF DESCRIPTION OF THE DRAWINGS

The present invention will now be described by reference to the following figures, in which identical reference numerals refer to identical elements and in which:

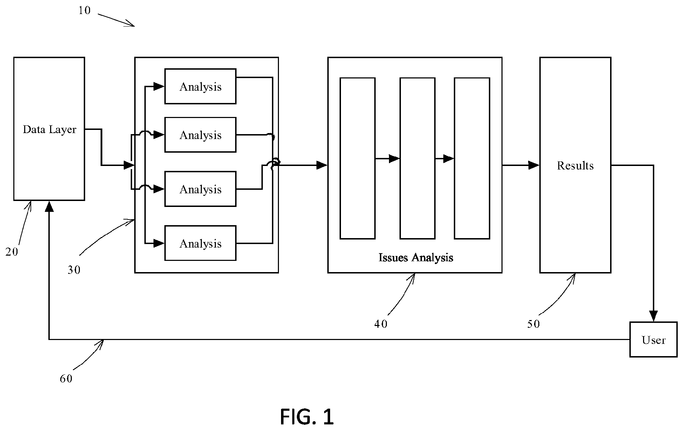

**Figure** 1 is a block diagram of a system according to one aspect of the present invention.

### DETAILED DESCRIPTION

Referring to Figure 1, a block diagram of a system according to one aspect of the present invention is illustrated. The system 10 includes a number of stages: a data layer stage 20, a data analysis stage 30, an issue analysis stage 40, and a results presentation stage 50. In one variant of the present invention, a feedback loop 60 is present that loops a user's input back to the data layer stage 20.

In operation, this aspect of the present invention receives data regarding the various components of a supply chain through the data layer stage 20. The data is then processed and then sent to multiple analysis modules in the data analysis stage 30. These analysis modules analyze the data and, using models trained on historical data regarding the supply chain components, predictions are made regarding potential problems with one or more of the supply chain components. These analysis modules operate independently of one another and each one of these analysis modules may operate/work on different components and/or different parts of the supply chain and/or the analysis modules may be specialized in detecting a particular type of issue across the supply chain. Once predictions have been made and potential issues and/or problems have been identified in the supply chain, the outputs of the different analysis modules are then sent to the issue analysis stage. This stage then classifies the potential problems found, determines which areas/fields these problems may relate to, and determines the users to be alerted about these potential problems. In addition, this stage may also correlate issues with one or more common root causes, especially since a root cause may exhibit itself as more than a single symptom in the supply chain. As well, the potential problems are ranked/assessed in terms of relevance and/or severity of consequences. These potential problems are then packaged accordingly and routed to the relevant users. These relevant users are alerted to the potential problems by way of a suitable user interface at the results presentation stage. Once the user(s) have reviewed the potential problems, the user(s) can then adjust the parameters of the supply chain using the user interface to mitigate, prevent, or otherwise minimize (if not eliminate) the consequences of the potential problems. These mitigating or preventative actions can then be sent back to the data layer stage to determine if these actions would be useful in heading off the potential problems.

Variants as well as details about the implementations of the various stages of the system are described below.

### Data layer stage

As noted above, the data layer stage receives data about the supply chain. This data may include production schedules at specific supply chain locations (e.g. factories, assembly facilities), projected departure and arrival schedules for delivery vehicles for specific storage facilities (e.g. depots, warehouses), current and projected inventory levels at these storage facilities, current and projected inventory levels at distribution centres and/or retail centres (e.g. retail stores), product identification for all of the above data (e.g. identification of and number of pieces of products for each delivery vehicle that is leaving and/or arriving at a storage depot), projected transit times for each delivery vehicle between each source location and destination location, current and projected staffing levels at each location in the supply chain, inventory levels for specific products at specific supplier locations/manufacturing facilities, current and projected manufacturing and/or delivery schedules for specific suppliers, as well as any data that may relate to delivery, manufacturing, inventory, transit times, and/or product identification. In addition, depending on the configuration of the various components of the system, data that is external to the supply chain but which may affect the supply chain may be received. Such external data may include current and projected weather patterns and news items (e.g. news items about industrial or job actions near or at the various manufacturing/storage locations).

Other pieces of data that may be received by the data layer stage may include:
expected future delivery schedules, amounts of at least one product scheduled for delivery to specific locations, real-time or near real-time delivery data for at least one specific delivery location, real-time or near real-time production schedules for at least one product source, real-time or near real-time inventory levels for at least one product in at least one location, data regarding dates and times of expected departure and arrival of deliveries to and from at least one location, real-time or near real-time location tracking of delivery vehicles as said delivery vehicles transit from one delivery location to another, and delivery manifests for delivery vehicles as said delivery vehicles transit between deliver locations.

Again depending on the configuration of the system, the various data items may be received in real-time or in near real-time. Historical data regarding the various points in the supply chain may also form part of the data received by the data layer stage. In some implementations of the system, the data layer stage may store some historical data for comparison purposes with results of recommended actions as well as results of previous forecasts.

In addition to receiving the various pieces of data the data layer stage would also format that data into a form that is suitable for use by the subsequent stages. Preferably, the data layer stage would format the data received into a specific uniform format that would be adhered to by the various analysis modules. In addition, it is preferred if the data layer stage would classify and route the various pieces of data to specific streams based on what the data related to. As an example, data that may relate to the portion of the supply chain the transits through a specific region may be routed to a specific stream. As well, data relating to, for example, a specific city (e.g. data relating to a depot in that city, data relating to delivery vehicles that transit through that city) may also be routed to a different stream. Of Course, data may relate to multiple streams and, as such, may be routed to different streams. Thus, a piece of data that relates to industrial action in a specific region may be routed to a stream for industrial actions, a stream specific to that region, streams for cities in that region, and streams for transport related data that transit through that region. It should be noted that, in addition to or in lieu of these streams, data may be tagged with specific categories that would relate to what the data related to.

From the above, it should thus be clear that the data layer stage can tag/stream data so that data relating to specific components of the supply chain (e.g. specific depots, specific manufacturing facilities, etc., etc.) can be easily accessed by the relevant analysis modules.

### Data analysis stage

The data analysis stage comprises multiple analysis modules that operate in parallel. Each analysis module receives/retrieves data relating to its analysis target from the data layer stage. Thus, an analysis module that analyzes patterns in rail and/or truck transport vehicles would receive/retrieve all the data that relates to or may affect rail or truck transport vehicles. It should be clear that, depending on the configuration of the data layer stage, the various analysis modules may receive specific data streams or the various analysis modules may filter data to search for specific tags that would be relevant to the analysis to be performed by the analysis modules.

In one implementation, each analysis module operates independently and in parallel of the other analysis modules. This allows for execution efficiencies as the analysis module would not encounter issues with data collisions or data dependencies from other analysis modules. Each analysis module can thus operate as a stand-alone module, independently receiving/retrieving data from the data layer stage and producing output for subsequent stages of the system.

It should be clear that each analysis module may perform a different type of analysis on the various data points received by the data layer stage. Analysis modules may be location specific (i.e. an analysis module may be analyzing data specific to a specific location/facility or specific to a certain region/country/ city), product specific (i.e. an analysis module may be specific as to the product being tracked across the supply chain), or they may be specific as to the potential problem being tracked/predicted (e.g. an analysis module may be tasked with analyzing weather reports to forecast the potential effects of near future weather patterns on the supply chain). It should be clear that the level of granularity of the analysis performed by the analysis modules is dependent on the implementation. Thus, an analysis module may analyze the patterns that affect a specific warehouse and a different analysis module may analyze the overall effects of oil price fluctuations on delivery delays for the supply chain as a whole. Or, in another implementation, an analysis module may be tasked with analyzing the transit times or delays for a specific product in a specific region and/or country.

It should also be clear that each analysis module is, preferably, tasked with a specific analysis that is dependent on the implementation. As such, one analysis module may be tasked with analyzing the patterns of inventory at a specific depot and a different analysis module may analyze the arrival/departure patterns for the delivery vehicles for that specific depot.

The various analysis modules may take the form of software or hardware/software modules that implement machine learning based models to perform the analysis of the current data and to predict potential problems based on that current data. In some implementations, the machine learning based models may be used to determine/work relationships between components of the supply chain that may not be commonly visible but which may be identified as providing valuable insight into the data and the supply chain as a whole. These machine learning modules that implement the models can be trained using historical data as may be available regarding the supply chain as a whole or, depending on implementation, they can be trained using historical data for a specific component of the supply chain (e.g. historical data regarding a specific manufacturing facility, a specific depot, or a specific warehouse). Depending on the implementation, continuous learning and/or periodic training may be conducted on the various models being implemented by the analysis modules. This may take the form of receiving recent data from the data layer stage to update known patterns of behaviour in the models with the latest data points. As an example, recent data may be accumulated in the data layer stage and, once a sufficient amount of recent data has been collected, this recent data can then be used to train/update one or more models being used by the analysis modules. Other historical data that may be used for training may include: historical delivery schedules; historical data of transit times between at least one product source and at least one delivery location; historical production times for at least one product for at least one product source; historical inventory data for at least on delivery location; and a history of demand for one or more products.

One variant of the present invention uses at least one analysis module that uses a node/nodal view of the various components of the supply chain. In this variant, the various components of the supply chain (e.g. manufacturing facilities, storage depots, warehouses, stores, etc.) are each represented as a node in a graph. The parameters of each node are taken from the delivery, manufacturing, arrival, and inventory parameters for that node. As an example, a storage depot may have x units of product A and y units of product B stored in that depot. Every z days, a1 units of product A and b1 units of product B are delivered to that depot from factory F and every c1 days a2 units of product A and b2 units of product B are taken out of inventory to be delivered to store C. The parameters for the node that represents that storage depot may thus be (x, A, y, B, al, A, b1, B, F, a2, A, b2, B, C). These parameters can then be analyzed in light of other data and can be used to determine the probabilities relating to inventory levels. Similarly, these parameters can be used to determine, in conjunction with other data, the likelihood or probabilities of delays, outages, and other anomalies relating to deliveries. The use of such a nodal view of the supply chain allows for the analysis of not just the product flow through the various nodes in the graph but it also allows for the analysis of the links or interconnections in that graph. Of course, in such a nodal view, the links between the various nodes may represent the relationships (e.g. transport links, inventory dependencies, etc., etc.) between these various nodes. These links or interconnections may be analyzed if not optimized using such a graph. It can be imagined that multiple graphs for one or more regions of the supply chain can be generated and/or analyzed with each graph being for the analysis of one or more aspects of the that area of the supply chain.

It should be clear that, in one approach, analysis modules may detect potential problems by forecasting, among others, product supply and demand for one or more locations/components in the supply chain. This forecasting can be performed up to x days or weeks into the future based on the current data. Of course, as noted above, the forecasting may be based on the analysis module implementing a model that is trained on historical data. As an example, forecasting can take into account fixed historical data that are known to be recurring, e.g. national holidays, regional holidays, and local festivals. Such fixed and recurring data points are known to cause delays in deliveries and/or halt production.

In addition to such fixed and recurring data points, the analysis modules may also take into account incoming present and future data such as weather forecasts and relevant news items. As an example, a weather forecast that a strong typhoon is predicted to make landfall at a specific location on a specific day may mean that deliveries to depots or stores near that location may be disrupted for days after that predicted landfall. Or, a news item that industrial unrest in a region x is predicted to last for y days may mean that productions will be slowed and/or halted for facilities in that region and that this disruption is expected to last for at least y days. Such a news item may also mean that deliveries transiting through or destined for that region will also be halted and/or slowed. It should, of course, be clear to a person skilled in the art that these conclusions and relationships between events (e.g. weather events, news items, etc.) and effects on the supply chain (e.g. delays in delivery, non-delivery of product, etc.) are not predefined in the analysis module but are learned using the machine learning models trained on historical data.

The various analysis modules may also take into account the knock-on effects (i.e. the cumulative or secondary effects) of disruptions in the supply chain. As an example, a fire at a manufacturing facility that shuts down the facility will, of course, halt production at that facility. However, knock-on effects may include not just a delay in deliveries for depots supplied by that manufacturing facility but also lower inventory levels that those depots and potentially at stores within the region serviced by those depots. If the price of the product fluctuates due to demand, then a lowering of the supply due to the fire may result in the increase of that price. Demand for the product, based on the increased price, can be modeled by an analysis module and may, correspondingly, affect the inventory levels for that product in the region.

As can be imagined, some of these analysis modules may be duplicated in the data analysis stage. Depending on the implementation, the analysis for one part of the supply chain may be duplicated for other parts of that same supply chain. This may involve duplicating the analysis module that performs the same analysis but having the duplicated analysis module perform the same analysis on a different data set. Thus, as an example, analysis module A may analyze the transport patterns for deliveries of a specific product through region x. Analysis module B, on the other hand, may perform the exact same analysis for transport patterns for deliveries of another specific product through region y. In a machine learning implementation of the system, modules A and B may be trained by similar data sets so that the same predictive analysis is applied to the data sets for regions x and y separately. Of course, these two modules may also be trained on entirely different data sets if the two regions have entirely different dynamics.

In terms of usefulness, one or more of the analysis modules may also have the ability to pinpoint the potential cause or root cause of a potential problem or issue identified. Such a capability would result in the analysis module to not just identify a potential issue but also where and how that potential issue arose. This output may be generated by using machine learning techniques that take advantage of the nodal view of the supply chain to trace and, potentially, pinpoint one or more causes of a potential problem. An output such as this can then be used by the subsequent stages to explain and/or clarify the potential problem to the relevant users.

In another implementation, analysis modules may be constructed by different vendors. As long as the analysis module is configured to accept the specific uniform data format from the data layer stage and as long as the analysis module produces an output that is compatible with the issue analysis stage, the analysis module can be produced by anyone. The modularity of the data analysis stage allows for the installation, removal, and upgrading of the various analysis modules. A company using the system can thus receive one or more analysis modules from its suppliers so that the company can properly track and/or troubleshoot the components of its supply chain that is concerned with the suppliers providing the analysis modules. Thus, if company A's supply chain includes a storage depot and a manufacturing facility managed by or owned by company B, then company B can provide one or more analysis modules that are optimized for detecting and/or forecasting potential issues with that storage depot and manufacturing facility. Issues arising at those facilities or issues that are forecast to arise at those facilities can thus be brought to company B's attention while company A's users adjust the supply chain parameters to mitigate if not bypass the issues that could arise because of those issues.

### Issue Analysis Stage

The issue analysis stage receives the various outputs of the various analysis modules and analyzes these outputs for relevance, severity of consequences, and other criteria before routing the outputs to the relevant users. Where necessary, the issue analysis stage also generates alerts based on the analysis module outputs and routes these alerts to the relevant users.

**In** one implementation, the issue analysis stage is comprised of multiple modules that are may be serially executed on the data received from the data analysis stage. One or more modules may classify the issues or potential issues flagged by the data analysis stage. The classification of these issues or problems may be performed on multiple bases such as: location, severity of effects (if the problem or issue is not addressed), cause/root cause of the issue/problem, geographic scope of the issue/problem (i.e. whether the issue/problem has a local, regional, country, or global scope), the probability that an issue or a specific issue will arise. and how far into the future is the potential problem/issue (e.g. whether the problem will arise in the next few days, next few weeks, or next month).

Based partly on the classification of the issue/problem from the data analysis stage, one or more modules may then route the issue/problem to the relevant user. User relevance for a specific issue can be determined by multiple criteria such as scope of a user's position and geographic scope of a user's responsibility (e.g. a user with responsibility for inventory for a specific region would receive alerts or issues that affect inventory for that region). Thus, a potential issue that would affect inventory levels for the Asian region would not be flagged for a user whose scope of responsibility only encompasses the African region.

It should be clear that the issue analysis stage would generate the relevant alerts for the relevant users based on the potential issues or predicted problems from the data analysis layer. Thus, one or more modules of the issue analysis layer would determine if a potential issue is severe enough to generate an alert. Different criteria for different users may be used to determine if an alert or a simply informational flag is necessary for each issue identified. As an example, a potential low inventory for a product in a specific city may generate an alert for a user whose scope of responsibility includes the inventory for that city. However, for a user who is responsible for inventory in a neighboring region or a user who is responsible for transport in another region may only receive, for example, an informational flag for that potential issue. Similarly, a potential industrial action in one region that may disrupt supplies in that region may generate a red alert for managers within that region but may only generate informational flags for managers in nearby regions.

In addition to the alerts and/or informational flags for each of the potential issues or problems in the supply chain, the system may package relevant data regarding each alert or flag for transmittal to relevant users along with the corresponding alert or flag. As an example, if a weather event is forecast to cause anomalies in transport between cities A and B, the flags or alerts cause by this potential issue may also include data that specifies that the snowstorm that may cause problems is heading in a northwesterly direction and may be moving towards cities C and D. Thus, the circumstances surrounding the alert and/or flag may thus be communicated to the relevant user along with that alert and/or flag. Such data may assist the user in formulating a mitigating course of action or it may assist the user in planning other actions that may affect the supply chain. In implementations where the analysis module also tracks one or more causes or root causes of a potential problem, such causes may also be communicated to the relevant user. Note, of course, that for informational flags, such causes or root causes may not need to be communicated to the user.

Much like the analysis modules, the various modules in the issue analysis stage may implement machine learning models to produce results. Such machine learning models may be trained using historical data or where applicable, continuous learning methods may also be applied. The modules that produce alerts and the modules that determine and select the relevant users for specific potential issues may be trained using historical data or these may be trained using synthetic data to ensure that the proper alerts are generated and that the proper relevant users are alerted or provided with suitable data. Of course, the models tasked with classifying the various potential issues from the data analysis layer would be trained using historical data, some of which may have also been used to train the analysis modules producing the predicted issues in the supply chain.

**In** an alternative embodiment, one or more of the modules in the issue analysis stage may be a rules based module instead of a machine learning based module. Each alert or flag may be generated along with one or more tags that detail areas of responsibility or areas of concern that map to the different portions of the supply chain. Thus, inventory related issues, transport related issues, delay related issues, etc., would each get their own specific tag. An alert or a flag may thus have multiple tags to detail the areas that may be affected by that alert or flag. As an example, a potential industrial action in a Birmingham UK factory may have a tag for industrial action, a tag denoting the city of Birmingham, a tag for the Birmingham region, a tag for an inventory related issue, a tag for a work stoppage, and a tag for delivery delays. Other tags may, of course, be applied. For a user whose area of responsibility covers Birmingham, a suitable client would thus filter the various alerts and flags generated for tags that relate to the city of Birmingham. Similarly, a client for a user who deals with inventory in the region would also filter the alerts to sift and find alerts or flags that have the inventory tag as well as the region's tag. Other methods for filtering and/or selecting the various relevant alerts and/or flags may, of course, be used.

In addition to the above, the issue analysis stage may also package an explanation of the potential problem or issue detected by the analysis modules. Such an explanation may take the form of the data is the basis for the predicted problem or issue along with the logic behind the prediction. As an example, if a well-known raucous local festival is known to delay and/or disrupt scheduled deliveries in a specific geographical region, historical data detailing the delayed deliveries may form part of the surrounding circumstances for the potential problem. A user receiving an alert regarding the high probability of delayed deliveries in the region would thus be provided with the historical data and would thus understand the basis for the predicted delays. Similarly, if current data indicates a significant delay in production at a manufacturing facility, this can be extrapolated by the analysis module by adding historical delay data to each stage of the supply chain from the manufacturing facility to the various depots. Thus, a manufacturing delay of 2 days may balloon to an overall delay of 6 days before the product is delivered to its final destination from the manufacturing facility. An alert provided to the relevant user may thus indicate a projected delay of 6 days before product is delivered and, as an explanation, the 2 day delay at the manufacturing facility and the projected cumulative delays (based on historical data) at the various depots may also be provided with the alert. Of course, the explanation may also take the form of providing the user with an indication of one or more root causes as well informing the user of other events which may have been caused by the same root cause(s).

### Results Presentation Stage

The results presentation stage provides the end user with a user interface and a user experience that allows the user to view relevant alerts and informational flags relating to the user's areas of responsibility. In addition, the results presentation stage preferably also allows the user to implement mitigating actions or to take steps to prevent and/or head off the negative effects of the potential problems identified in the alerts.

Preferably, the results presentation stage provides a dashboard that allows the relevant user to change/adjust the parameters of the supply chain to address the potential issues highlighted by the system. Of course, depending on the level of control that the user may have on the supply chain, the user's options on the dashboard may be limited. As an example, a user who controls the delivery of products for a specific city would be able to control the delivery schedules for that city. However, such a user would not be allowed to change the delivery schedules for other cities and may not even be allowed to view such schedules. Accordingly, the scope of control and the scope of the data available to a user would be commensurate with that user's position and scope of responsibility.

In one variant of the present invention, the user would be allowed to simulate the results of his/her actions to mitigate the effects of the alerts. Such a simulation would, effectively, feed the parameters of the user's actions back to the data layer stage so that its effects can be determined. If such actions cause other issues to arise, these issues will also be flagged and/or identified by the system to the user. Such a simulation system may, of course, be a separate instance of the system of the present invention as mixing the current live system with a simulation system may cause issues. Other means of implementing such a simulation system would, of course, be possible.

In another variant, the user would be allowed to adjust the parameters of the supply chain (e.g. re-route shipments to avoid potential problem areas due to inclement weather, industrial action, etc., etc.) in real time and not simply in simulation. Such a variant, of course, would not allow the user to run what-if scenarios.

A hybrid of the two variants above may allow the user to perform what-if simulations while still controlling the parameters of the supply chain. For this variant, the dashboard may have a setting such that the analysis modules are temporarily insulated from new data in the data layer (e.g. by passing a flag to the analysis modules such that the analysis modules would only operate on temporary data and not on real data from the data layer stage). This allows the system to operate as a simulator for the user's what-if scenarios without confusing the what-if data with real world data.

Regarding the user interface, alerts may be highlighted to the user using a tiered system such as a color coding system with predefined different colors denoting a severity of an alert. Severity may, of course, be dependent on one or more criteria such as temporal proximity of the potential issue and severity of the consequences (in terms of time and/or money and/or overall effects).

It should be clear that the different stages of the system may be implemented as software modules operating on one or more servers or server farms. However, the various analysis modules may each be a different software module or a combined hardware/software module that is logically coupled to the data layer stage and to the issue analysis stage. For such an implementation, each of the analysis modules may be logically coupled/de-coupled with the relevant stages of the system without regard to the other analysis modules. Similarly, the results presentation stage may be a client resident on and executing on a user's workstation while the rest of the system are computing resources that are geographically remote from the user. Alternatively, the results presentation stage may take the form of a browser accessible interface to a module resident on a server remote from the user.

It should be clear that the various aspects of the present invention may be implemented as software modules in an overall software system. As such, the present invention may thus take the form of computer executable instructions that, when executed, implements various software modules with predefined functions.

The embodiments of the invention may be executed by a computer processor or similar device programmed in the manner of method steps, or may be executed by an electronic system which is provided with means for executing these steps. Similarly, an electronic memory means such as computer diskettes, CD-ROMs, Random Access Memory (RAM), Read Only Memory (ROM) or similar computer software storage media known in the art, may be programmed to execute such method steps. As well, electronic signals representing these method steps may also be transmitted via a communication network.

Embodiments of the invention may be implemented in any conventional computer programming language. For example, preferred embodiments may be implemented in a procedural programming language (*e.g.,* "C" or "Go") or an object-oriented language (*e.g.,* "C++", "java", "PHP", "PYTHON" or "C#"). Alternative embodiments of the invention may be implemented as pre-programmed hardware elements, other related components, or as a combination of hardware and software components.

Embodiments can be implemented as a computer program product for use with a computer system. Such implementations may include a series of computer instructions fixed either on a tangible medium, such as a computer readable medium (*e.g.,* a diskette, CD-ROM, ROM, or fixed disk) or transmittable to a computer system, via a modem or other interface device, such as a communications adapter connected to a network over a medium. The medium may be either a tangible medium (*e.g.,* optical or electrical communications lines) or a medium implemented with wireless techniques (*e.g.,* microwave, infrared or other transmission techniques). The series of computer instructions embodies all or part of the functionality previously described herein. Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (*e.g*., shrink-wrapped software), preloaded with a computer system (*e.g.,* on system ROM or fixed disk), or distributed from a server over a network (*e.g.,* the Internet or World Wide Web). Of course, some embodiments of the invention may be implemented as a combination of both software (*e.g.,* a computer program product) and hardware. Still other embodiments of the invention may be implemented as entirely hardware, or entirely software (*e.g.,* a computer program product or as a service offering using a software as a service model).

A person understanding this invention may now conceive of alternative structures and embodiments or variations of the above all of which are intended to fall within the scope of the invention as defined in the claims that follow.

## Claims

1. A system for managing a supply chain, the system comprising:
- a data layer stage for receiving data regarding components of said supply chain and for formatting said data for use by subsequent stages of said system;
- a data analysis stage for receiving and analyzing said data regarding said components of said supply chain;
- an issue analysis stage for receiving outputs of said data analysis stage, said issue analysis stage also being for:
- classifying predicted problems and for classifying potential problems to determine which components of said supply chain said problems relate to;
- ranking a severity of said problems; and
- routing an indication of at least one of said outputs of said data analysis stage to an end user; and
- a results presentation stage for presenting results from said issue analysis stage to said at least one end user, wherein said results presentation stage is configured to allow said at least one end user, when presented with at least one potential problem from an analysis module, to adjust at least one parameter in said supply chain and said data layer stage is configured to receive said adjusted at least one parameter such that said at least one parameter is used to determine effects on at least one component of said supply chain.

2. The system according to claim 1, wherein said data analysis stage comprises a plurality of analysis modules operating in parallel to one another.

3. The system according to claim 2, wherein each of said analysis modules is for either:
- detecting potential problems with said components of said supply chain; or
- predicting problems with said components prior to said problems occurring.

4. The system according to any of claims 1-3, wherein said routing is based on at least one of: a nature of said problem and a severity of said problem.

5. The system according to claim 1, wherein each of said analysis modules are independent of one another.

6. The system according to claim 1, wherein said data includes at least one of:
- expected future delivery schedules;
- amounts of at least one product scheduled for delivery to specific locations;
- real-time or near real-time delivery data for at least one specific delivery location;
- real-time or near real-time production schedules for at least one product source;
- real-time or near real-time inventory levels for at least one product in at least one location;
- data regarding dates and times of expected departure and arrival of deliveries to and from at least one location;
- real-time or near real-time location tracking of delivery vehicles as said delivery vehicles transit from one delivery location to another;
- current forecast and actual demand data;
- data external to said system that would affect one or more components of the supply chain; and
- delivery manifests for delivery vehicles as said delivery vehicles transit between deliver locations.

7. The system according to claim 1, wherein said at least one analysis module implements a machine learning model for detecting potential problems in at least one component in said supply chain, said machine learning model being trained using data comprising:
- historical delivery schedules;
- historical data of transit times between at least one product source and at least one delivery location;
- historical production times for at least one product for at least one product source;
- historical data of actual sales;
- historical data of actual demand; and
- historical inventory data for at least one delivery location.

8. The system according to claim 1, wherein said data layer stage outputs said data in a specific format and with specific data definitions that are common to all of said analysis modules.

9. The system according to claim 1, wherein each of said analysis modules has an output format and an output data definition that is common to all of said analysis modules.

10. The system according to claim 1, wherein said issue analysis stage comprises a plurality of modules for classifying, routing, and analyzing outputs of said analysis modules, optionally wherein said plurality of modules in said issue analysis stage are serially arranged.

11. The system according to claim 2, wherein at least one of said analysis modules uses a representation of said supply chain such that each component in said supply chain is represented as a node in a graph.

12. The system according to claim 1, wherein said problems are ranked according to at least one of: consequence cost, market share impact, customer satisfaction drop potential, supplier satisfaction potential, a probability of a problem occurring in a future time, a potential cause of said problems, and schedule disruption potential.

13. The system according to claim 1, wherein said routing is based on at least one of: a nature of said problem, at least one user's role relative to said supply chain, at least one user's profile relative to said supply chain, at least one user's area of responsibility relative to said supply chain, and a severity of said problem.

14. The system according to claim 1, wherein said issue analysis stage is further for correlating predicted problems with at least one common cause.

## Patentansprüche

1. System zum Verwalten einer Lieferkette, wobei das System Folgendes umfasst:
- eine Datenschichtphase zum Empfangen von Daten in Bezug auf Komponenten der Lieferkette und zum Formatieren der Daten zur Verwendung durch nachfolgende Phasen des Systems;
- eine Datenanalysephase zum Empfangen und Analysieren der Daten in Bezug auf die Komponenten der Lieferkette;
- eine Problemanalysephase zum Empfangen von Ausgaben der Datenanalysephase, wobei die Problemanalysephase auch zu Folgendem dient:
- Klassifizieren von vorhergesagten Problemen und Klassifizieren von möglichen Problemen, um zu bestimmen, auf welche Komponenten der Lieferkette sich die Probleme beziehen;
- Einstufen einer Schwere der Probleme; und
- Weiterleiten einer Angabe von mindestens einer der Ausgaben der Datenanalysephase an einen Endbenutzer; und
- eine Ergebnisdarstellungsphase zum Darstellen von Ergebnissen von der Problemanalysephase für den mindestens einen Endbenutzer, wobei die Ergebnisdarstellungsphase dazu konfiguriert ist, es dem mindestens einen Endbenutzer zu ermöglichen, wenn ihm mindestens ein mögliches Problem von einem Analysemodul dargestellt wird, mindestens einen Parameter in der Lieferkette einzustellen, und die Datenschichtphase dazu konfiguriert ist, den eingestellten mindestens einen Parameter derart zu empfangen, dass der mindestens eine Parameter verwendet wird, um Wirkungen auf mindestens eine Komponente der Lieferkette zu bestimmen.

2. System nach Anspruch 1, wobei die Datenanalysephase eine Vielzahl von Analysemodulen umfasst, die parallel zueinander arbeiten.

3. System nach Anspruch 2, wobei jedes der Analysemodule zu einem von Folgendem dient:
- Detektieren von möglichen Problemen mit den Komponenten der Lieferkette; oder
- Vorhersagen von Problemen mit den Komponenten, bevor die Probleme auftreten.

4. System nach einem der Ansprüche 1-3, wobei das Weiterleiten auf mindestens einem von Folgendem basiert: einer Art des Problems und einer Schwere des Problems.

5. System nach Anspruch 1, wobei jedes der Analysemodule unabhängig voneinander ist.

6. System nach Anspruch 1, wobei die Daten mindestens eines von Folgendem beinhalten:
- erwarteten zukünftigen Lieferzeitplänen;
- Mengen von mindestens einem Produkt, das zur Lieferung an spezifische Orte geplant ist;
- Lieferdaten für mindestens einen spezifischen Lieferort in Echtzeit oder nahezu in Echtzeit;
- Produktionszeitplänen für mindestens eine Produktquelle in Echtzeit oder nahezu in Echtzeit;
- Lagerbeständen für mindestens ein Produkt an mindestens einem Ort in Echtzeit oder nahezu in Echtzeit;
- Daten in Bezug auf Datum und Uhrzeit von erwarteter Abfahrt und Ankunft von Lieferungen zu und von mindestens einem Ort;
- Verfolgen von Lieferfahrzeugen in Echtzeit oder nahezu in Echtzeit, wenn die Lieferfahrzeuge von einem Lieferort zu einem anderen fahren;
- aktuellen vorhergesagten und tatsächlichen Bedarfsdaten;
- Daten außerhalb des Systems, die eine oder mehrere Komponenten der Lieferkette beeinflussen würden; und
- Lieferscheinen für Lieferfahrzeuge, wenn die Lieferfahrzeuge zwischen verschiedenen Lieferorten fahren.

7. System nach Anspruch 1, wobei das mindestens eine Analysemodul ein Modell für maschinelles Lernen zum Detektieren von möglichen Problemen in mindestens einer Komponente in der Lieferkette implementiert, wobei das Modell für maschinelles Lernen unter Verwendung von Daten trainiert wird, die Folgendes umfassen:
- vergangene Lieferzeitpläne;
- vergangene Daten für Transportzeiten zwischen mindestens einer Produktquelle und mindestens einem Lieferort;
- vergangene Produktionszeiten für mindestens ein Produkt für mindestens eine Produktquelle;
- vergangene Daten für tatsächliche Verkäufe;
- vergangene Daten für den tatsächlichen Bedarf; und
- vergangene Bestandsdaten für mindestens einen Lieferort.

8. System nach Anspruch 1, wobei die Datenschichtphase die Daten in einem spezifischen Format und mit spezifischen Datendefinitionen ausgibt, die für alle der Analysemodule gemein sind.

9. System nach Anspruch 1, wobei jedes der Analysemodule ein Ausgabeformat und eine Ausgabedatendefinition aufweist, die für alle der Analysemodule gemein sind.

10. System nach Anspruch 1, wobei die Problemanalysephase eine Vielzahl von Modulen zum Klassifizieren, Weiterleiten und Analysieren von Ausgaben der Analysemodule umfasst, wobei gegebenenfalls die Vielzahl von Modulen in der Problemanalysephase in Reihe angeordnet ist.

11. System nach Anspruch 2, wobei mindestens eines der Analysemodule eine Darstellung der Lieferkette verwendet, sodass jede Komponente in der Lieferkette als ein Knoten in einem Graphen dargestellt wird.

12. System nach Anspruch 1, wobei die Probleme gemäß mindestens einem von Folgendem eingestuft werden: Kosten für Folgen, Einfluss des Marktanteils, Möglichkeit für einen Rückgang der Kundenzufriedenheit, Möglichkeit für Lieferantenzufriedenheit, einer Wahrscheinlichkeit für ein Problem, das in der Zukunft auftritt, einer möglichen Ursache für die Probleme und einer Möglichkeit für eine Zeitplanunterbrechung.

13. System nach Anspruch 1, wobei das Weiterleiten auf mindestens einem von Folgendem basiert: einer Art des Problems, der Rolle mindestens eines Benutzers in Bezug auf die Lieferkette, dem Profil mindestens eines Benutzers in Bezug auf die Lieferkette, dem Wahrscheinlichkeitsbereich mindestens eines Benutzers in Bezug auf die Lieferkette und einer Schwere des Problems.

14. System nach Anspruch 1, wobei die Problemanalysephase ferner zum Korrelieren vorhergesagter Probleme mit mindestens einer gemeinsamen Ursache dient.

## Revendications

1. Système de gestion d'une chaîne d'approvisionnement, le système comprenant :
- une étape de couche de données pour recevoir des données concernant des composants de ladite chaîne d'approvisionnement et pour formater lesdites données en vue de leur utilisation par les étapes suivantes dudit système ;
- une étape d'analyse des données pour recevoir et analyser lesdites données concernant lesdits composants de ladite chaîne d'approvisionnement ;
- une étape d'analyse des problèmes pour recevoir des résultats de ladite étape d'analyse des données, ladite étape d'analyse des problèmes servant également à :
- classer des problèmes prévus et classer des problèmes potentiels afin de déterminer à quels composants de ladite chaîne d'approvisionnement lesdits problèmes se rapportent ;
- classer lesdits problèmes par ordre de gravité ; et
- acheminer une indication d'au moins l'un desdits résultats de ladite étape d'analyse des données vers un utilisateur final ; et
- une étape de présentation des résultats pour présenter des résultats de ladite étape d'analyse des problèmes audit au moins un utilisateur final, dans laquelle ladite étape de présentation des résultats est configurée pour permettre audit au moins un utilisateur final, lorsqu'au moins un problème potentiel provenant d'un module d'analyse lui est présenté, d'ajuster au moins un paramètre dans ladite chaîne d'approvisionnement, et ladite étape de couche de données est configurée pour recevoir ledit au moins un paramètre ajusté de telle sorte que ledit au moins un paramètre soit utilisé pour déterminer des effets sur au moins un composant de ladite chaîne d'approvisionnement.

2. Système selon la revendication 1, dans lequel ladite étape d'analyse des données comprend une pluralité de modules d'analyse fonctionnant en parallèle les uns avec les autres.

3. Système selon la revendication 2, dans lequel chacun desdits modules d'analyse sert soit :
- à détecter des problèmes potentiels avec lesdits composants de ladite chaîne d'approvisionnement ; soit
- à prédire des problèmes avec lesdits composants avant que lesdits problèmes ne se produisent.

4. Système selon l'une quelconque des revendications 1 à 3, dans lequel ledit acheminement est basé sur au moins l'un des éléments suivants :
une nature dudit problème et une gravité dudit problème.

5. Système selon la revendication 1, dans lequel chacun desdits modules d'analyse est indépendant les uns des autres.

6. Système selon la revendication 1, dans lequel lesdites données comprennent au moins l'un des éléments suivants :
- des calendriers de livraison futurs prévus ;
- des quantités d'au moins un produit dont la livraison est prévue à des emplacements spécifiques ;
- des données de livraison en temps réel ou quasi temps réel pour au moins un emplacement de livraison spécifique ;
- des calendriers de production en temps réel ou quasi temps réel pour au moins une source de produit ;
- des niveaux de stock en temps réel ou quasi temps réel pour au moins un produit dans au moins un lieu ;
- des données concernant des dates et heures de départ et d'arrivée prévues de livraisons à destination et en provenance d'au moins un lieu ;
- un suivi en temps réel ou quasi temps réel de la localisation de véhicules de livraison lorsque lesdits véhicules de livraison transitent d'un lieu de livraison à un autre ;
- des données sur les prévisions actuelles et la demande réelle ;
- des données externes audit système qui pourraient affecter un ou plusieurs composants de la chaîne d'approvisionnement ; et
- des manifestes de livraison pour des véhicules de livraison lorsque lesdits véhicules de livraison transitent entre des lieux de livraison.

7. Système selon la revendication 1, dans lequel ledit au moins un module d'analyse met en œuvre un modèle d'apprentissage automatique pour détecter des problèmes potentiels dans au moins un composant de ladite chaîne d'approvisionnement, ledit modèle d'apprentissage automatique étant entraîné à l'aide de données comprenant :
- des calendriers de livraison historiques ;
- des données historiques de temps de transit entre au moins une source de produit et au moins un lieu de livraison ;
- des délais de production historiques d'au moins un produit pour au moins une source de produit ;
- des données historiques des ventes réelles ;
- des données historiques de la demande réelle ; et
- des données historiques des stocks pour au moins un lieu de livraison.

8. Système selon la revendication 1, dans lequel ladite étape de couche de données produit lesdites données dans un format spécifique et avec des définitions de données spécifiques qui sont communes à tous lesdits modules d'analyse.

9. Système selon la revendication 1, dans lequel chacun desdits modules d'analyse a un format de sortie et une définition de données de sortie qui sont communs à tous lesdits modules d'analyse.

10. Système selon la revendication 1, dans lequel ladite étape d'analyse des problèmes comprend une pluralité de modules pour classer, acheminer et analyser des résultats desdits modules d'analyse, dans lequel optionnellement ladite pluralité de modules dans ladite étape d'analyse des problèmes est disposée en série.

11. Système selon la revendication 2, dans lequel au moins l'un desdits modules d'analyse utilise une représentation de ladite chaîne d'approvisionnement de telle sorte que chaque composant de ladite chaîne d'approvisionnement est représenté comme un nœud dans un graphe.

12. Système selon la revendication 1, dans lequel lesdits problèmes sont classés en fonction d'au moins l'un des éléments suivants : coût des conséquences, impact sur la part de marché, potentiel de baisse de la satisfaction des clients, potentiel de satisfaction des fournisseurs, probabilité qu'un problème survienne à l'avenir, cause potentielle desdits problèmes et potentiel de perturbation du calendrier.

13. Système selon la revendication 1, dans lequel ledit acheminement est basé sur au moins l'un des éléments suivants : une nature dudit problème, au moins un rôle utilisateur par rapport à ladite chaîne d'approvisionnement, au moins un profil utilisateur par rapport à ladite chaîne d'approvisionnement, au moins un domaine de responsabilité utilisateur par rapport à ladite chaîne d'approvisionnement et une gravité dudit problème.

14. Système selon la revendication 1, dans lequel ladite étape d'analyse des problèmes sert en outre à corréler des problèmes prédits avec au moins une cause commune.
